# EUROPÄISCHE PATENTSCHRIFT

(11) **EP 1 010 990 B1**
(45) Veröffentlichungstag und Bekanntmachung des Hinweises auf die Patenterteilung: **07.06.2006**
(21) Anmeldenummer: 99122495.7
(22) Anmeldetag: 11.11.1999
(51) Int. Cl.: G01V 3/10

(54) **Anordnung zum Erzeugen und/oder Empfangen eines Magnetfeldes**
Arrangement for generation and/or receiving a magnetic field
Dispositif de génération et/ou de réception d'un champ magnétique

(30) Priorität: 18.12.1998 DE 19858714; 09.03.1999 DE 29904326 U
(43) Veröffentlichungstag der Anmeldung: 21.06.2000
(73) Patentinhaber: FIRMA ING. KLAUS EBINGER, D-51149 Köln (DE)
(72) Erfinder: Ebinger, Klaus, 51149 Köln (DE)
(74) Vertreter: Heim, Hans-Karl

(56) Entgegenhaltungen:
- FR-A- 2 553 523
- FR-A- 2 626 680
- US-A- 4 605 898
- US-A- 5 121 105
- US-A- 5 425 166

## Beschreibung

Die Erfindung betrifft eine Anordnung zum Erzeugen und Empfangen eines Magnetfeldes.

Derartige Anordnungen werden beispielsweise bei der Metalldetektion eingesetzt. Typische Anwendungsgebiete sind die Minensuche oder die Personen- bzw. Objektkontrolle. Ein von der Anordnung erzeugtes Magnetfeld wird durch die Anwesenheit eines Metallobjektes gestört. Diese Störung wirkt auf die erzeugende Anordnung zurück bzw. auf das von einer weiteren Anordnung empfangene Magnetfeld. Durch geeignete an dem Sender und/oder Empfänger vorgesehene Schaltungseinrichtungen kann die Störung des Magnetfeldes nachgewiesen werden. Dies eröffnet die Möglichkeit, auf die Anwesenheit von Metallobjekten und auch auf deren räumliche Lage bzw. deren Beschaffenheit zurückzuschließen.

Herkömmlich werden die beschriebenen induktiven Sensoren in einer Drahtwickeltechnik hergestellt. Diese Drahtwicklungen umschließen dann eine Fläche, deren Größe und deren Lage im Raum eine wichtige Rolle für die Funktion der Anordnung spielt. Nachteilig an den mittels Drahtwickeltechnik hergestellten Anordnungen ist jedoch, daß die Herstellung aufwendig und teuer ist. Ferner sind in Drahtwickeltechnik hergestellte Anordnungen oft in ihrer geometrischen Gestalt kaum flexibel, so daß sie stets nur für einen speziellen Zweck einsetzbar sind.

Ein Beispiel für einer derartige Detektoreinrichtung ist aus US-A-4 605 898 bekannt. Die Anordnung besteht aus mehreren zueinander kreuzweise angeordneten Sendespulen und der gleichen Anzahl an Empfangsspulen. Im Gegenstatz zu dem hier beschriebenen Verfahren wird diese Spulenanordnung mit Pulsinduktionstechnik betrieben. Andere ähnliche herkömmliche Torsonden sind aus FR-A-2 626 680 und FR-A-2 553 523 bekannt.

Aus der US-A-5 425 166 ist ein Stromtransformator, der auf einem keramischen Substrat ausgebildet ist, bekannt. Dünne Filme aus permeablen Matterial über einer leitenden Schicht bilden in mehreren Lagen einen Ringkern, der Teile eines stromleitenden Leiters umgibt.

Der Erfindung liegt die **Aufgabe** zugrunde, die beschriebenen Nachteile des Standes der Technik auszuräumen und insbesondere ein kostengünstiges und flexibles System zur Verfügung zu stellen.

Diese Aufgabe wird mit den Merkmalen des Anspruches 1 gelöst.

Erfindungsgemäß weist die Anordnung zum Erzeugen und Empfangen eines Magnetfeldes mindestens jeweils ein elektrisch leitendes längliches Element auf, wobei das mindestens jeweils eine längliche Element mindestens jeweils einen geschlossenen Stromkreis bildet und das mindestens jeweils eine längliche Element und/oder mindestens jeweils ein weiteres, mit dem mindestens jeweils einen länglichen Element in Verbindung stehendes elektrisch leitendes längliches Element jeweils einen Ringkern trägt. Durch diese Anordnung ist es möglich, den eigentlichen Sendekreis und Empfangskreis in einfacher Weise, d.h. insbesondere unter Vermeidung einer Drahtwickeltechnik zu verwirklichen, während das primäre magnetfelderzeugende bzw. für die Abnahme des Empfangssignals verantwortliche Element ein Ringkern ist, welcher auf die sendende bzw. empfangende Struktur aufgesetzt ist.

Weiter ist in dem zum Empfang vorgesehenen Stromkreis das mindestens eine weitere elektrisch leitende längliche Element ein Metallsteg, welcher die von dem Metallrahmen definierte Fläche im wesentlichen halbiert. Durch eine solche Anordnung stellt sich überraschenderweise ein kompensierender Effekt ein, welcher wie eine Schleifenkonfiguration einer "Acht" wirkt. Arbeitet der Metallrahmen als Empfänger, so werden in den Ringkern entgegengesetzte Spannungen induziert. Sind in diesem Fall Amplitude und Phase entgegengesetzt gleich, so stellt sich eine kompensierende Wirkung auf die Induktion ein.

Vorzugsweise sind die mindestens zwei geschlossenen Stromkreise aus mehreren elektrisch leitenden länglichen Elementen gebildet. Auf diese Weise sind verschiedenartige geometrische Anordnung realisierbar, was dem System Flexibilität verleiht.

Vorteilhafterweise handelt es sich bei den elektrisch leitenden länglichen Elementen um Metallstäbe, die mindestens einen Metallrahmen bilden. Metallstäbe sind kostengünstig, in einfacher Weise zu verarbeiten und robust.

Wenn der Metallrahmen als Sender arbeitet, sendet er bei der Konstruktion mit Mittelsteg, der die vom Stromkreis definierte Fläche halbiert, entgegengesetzt gleiche Wechselfelder aus.

Eine bevorzugte Ausführungsform besteht darin, daß die Anordnung mindestens zwei Metallrahmen aufweist und mindestens einer der Metallrahmen ein Sender und einer der Metallrahmen ein Empfänger ist. Damit können verschiedenartige geometrische Konstruktionen verwirklicht werden. Beispielsweise kann der Sender ein einfacher Metallrahmen sein, während es sich bei dem Empfänger um einen Metallrahmen mit einem den Ringkern tragenden Mittelsteg handelt.

Vorteilhafterweise sind zwei Metallrahmen vorgesehen, welche im wesentlichen parallel angeordnet sind. Diese Anordnung eignet sich zur Verwendung als "Torsonde", wobei vielfältige Anwendungsmöglichkeiten denkbar sind. Zum Beispiel ist die Anordnung bei der Personenkontrolle an Flughäfen und in Hochsicherheitsbereichen möglich; ferner können beispielsweise Wäschesäcke auf ihren Inhalt kontrolliert werden.

Bevorzugt sind zwei Metallrahmen vorgesehen, welche über isolierende Stäbe miteinander mechanisch verbunden sind. Durch diesen Umstand liegt eine besonders robuste Konstruktion vor, so daß die Anordnung an praktisch beliebigem Ort und auch bei extremen äußeren Bedingungen einsetzbar ist.

Vorzugsweise sind die Metallrahmen rechtwinklig. Dies macht die Konstruktion der Metallrahmen besonders einfach; ferner sind die elektromagnetischen Vorgänge in dem System vergleichsweise leicht zu überblicken, so daß selbst "vor Ort" noch zuverlässige Konstruktiosänderungen vorgenommen werden können.

Bevorzugt ist die Anordnung zerlegbar. Dies ist für den Einsatz an wechselnden Orten nützlich; auch der Einsatz im Gelände wird durch diesen Umstand in bequemer Weise ermöglicht.

Dabei ist es besonders bevorzugt, wenn die Metallrahmen und/oder der Metallsteg in einzelne Elemente zerlegbar sind. Besonders bei Anordnungen mit größeren Metallrahmen, beispielsweise zur Personenkontrolle, ist eine derartige Zerlegbarkeit vorteilhaft, so daß der Transport von einem Ort zum anderen erleichtert wird.

Aus demselben Grund ist es vorteilhaft, wenn die isolierenden Stäbe in einzelne Elemente zerlegbar sind.

Dabei ist es besonders nützlich, wenn die einzelnen Elemente miteinander verschraubt sind. Schraubverbindungen sind einfach herzustellen, robust, und sie bilden eine zuverlässige Verbindung.

Ebenfalls ist es möglich, daß die Einzelelemente miteinander verklemmt sind. Klemmechanismen können den Aufbau der Anordnung erleichtern und somit beschleunigen.

Auch kann vorteilhaft sein, daß in mindestens einem der Metallrahmen eine Vielzahl von Stegen eingebracht ist, so daß eine Vielzahl von Sendern und/oder Empfängern vorliegt. Auf diese Weise wirkt jeder elektrisch geschlossene Kreis als eigener Sende- bzw. Empfangskreis. Dies kann im Hinblick auf eine örtliche Auflösung und insbesondere für die Kleinteilordnung vorteilhaft sein.

In einer möglichen Ausführungsform bilden die länglichen Elemente eine Bewehrungsmatte. Damit ist es möglich, eine bereits in ein Bauwerk eingebrachte Bewehrungsmatte, welche im allgemeinen eine Vielzahl von Metallstegen aufweist, zu orten.

Weiterhin kann die Anordnung aus länglichen Elementen ein Zellengitter sein. Die Besendung eines Zellengittersystems würde dann die Sicherheit in Haftanstalten erhöhen, da Veränderungen an einem Gitter, etwa die Durchtrennung eines Gitterstabes, durch die sich ändernde Impedanz der Anordnung gemessen werden können.

Auch kann vorteilhaft sein, daß das mindestens eine elektrische Element das Leitungssystem einer Fußbodenheizung bildet. Spült man in die Fußbodenheizung ein leitfähiges Medium ein, etwa Salzwasser, so ist eine Besendung der Fußbodenheizung über einen Ringkern möglich.

Der Erfindung liegt die überraschende Erkenntnis zugrunde, daß durch einfache längliche Elemente, welche einen geschlossenen Stromkreis bilden, in Kombination mit einem aufgesetzten Ringkern der Aufwand im Vergleich zur Herstellung von Sonden in Drahtwickeltechnik erheblich vermindert werden kann. Ferner wird durch dieselben Maßnahmen die Flexibilität gesteigert, und durch ebenfalls einfache konstruktive Besonderheiten können kompensierende Effekte bereitgestellt werden.

Die vorliegende Erfindung wird nun beispielhaft mit Bezug auf die begleitenden Zeichnungen anhand bevorzugter Ausführungsformen beschrieben. Dabei zeigt:
- Fig. 1: eine perspektivische Ansicht eines Metallrahmens in einer ersten Ausführungsform;
- Fig. 2: eine perspektivische Ansicht eines Metallrahmens in einer zweiten Ausführungsform;
- Fig. 3: eine perspektivische Ansicht eines Metallrahmens in einer dritten Ausführungsform;
- Fig. 4: eine perspektivische Ansicht einer Metallrahmenanordnung in einer ersten Ausführungsform;
- Fig. 5: eine perspektivische Ansicht einer Metallrahmenanordnung in einer zweiten Ausführungsform;
- Fig. 6: eine perspektivische Explosionsdarstellung einer Metallrahmenanordnung in einer dritten Ausführungsform;
- Fig. 7: eine perspektivische Explosionsdarstellung eines Ausschnitts einer Metallrahmenanordnung in einer vierten Ausführungsform; und
- Fig. 8: eine perspektivische Explosionsdarstellung eines Ausschnitts aus einem Metallrahmen.

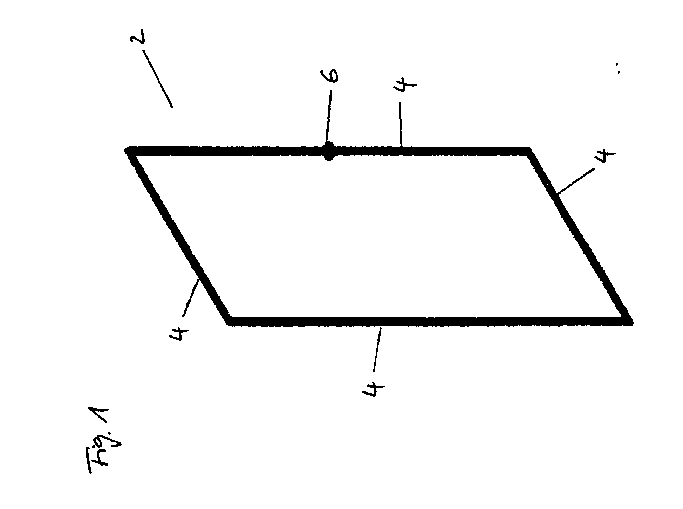

Figur 1 zeigt einen rechteckigen Metallrahmen 2 in perspektivischer Darstellung. Der Metallrahmen 2 weist vier Metallstäbe 4 auf. Einer der Metallstäbe 4 trägt einen Ringkern 6. Der Ringkern 6 kann auf jedem der Metallstäbe 4 angeordnet sein. Ferner können mehrere Ringkerne 6 auf einem oder mehreren Metallstäben 4 vorgesehen sein.

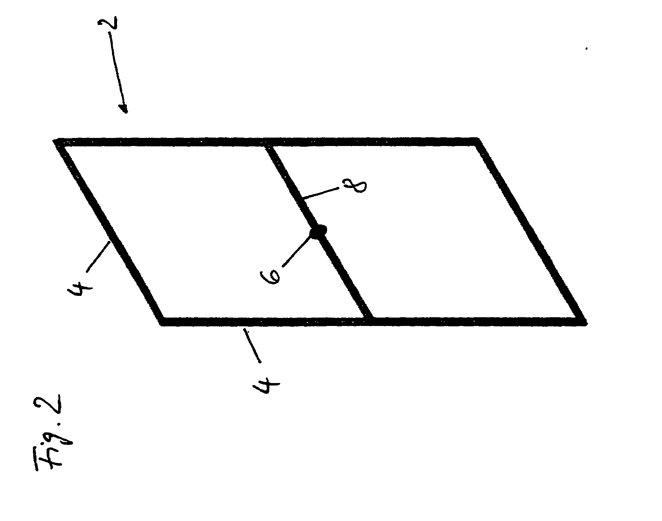

Figur 2 zeigt eine weitere Anordnung aus Metallstäben 4, welche einen Metallrahmen 2 bilden. Der Metallrahmen 2 hat weiterhin einen Mittelsteg 8, welcher parallel zur kurzen Seite des von dem Metallrahmen 2 gebildeten Reckeckes ausgerichtet ist. Der Mittelsteg 8 trägt einen Ringkern 6. Auch hier kann es sinnvoll sein, den Ringkern 6 auf einem anderen der Metallstäbe 4 anzuordnen bzw. mehrere Ringkerne 6 vorzusehen.

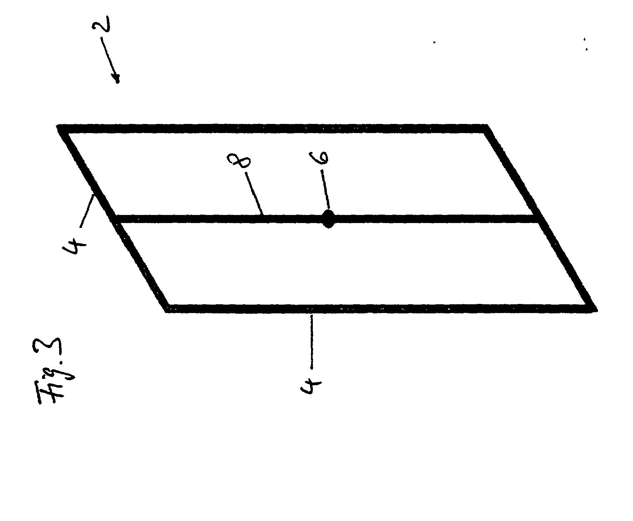

Figur 3 entspricht Figur 2 bis darauf, daß der Mittelsteg 8 parallel zur langen Seite des von dem Metallrahmen 2 gebildeten Rechtecks ausgerichtet ist.

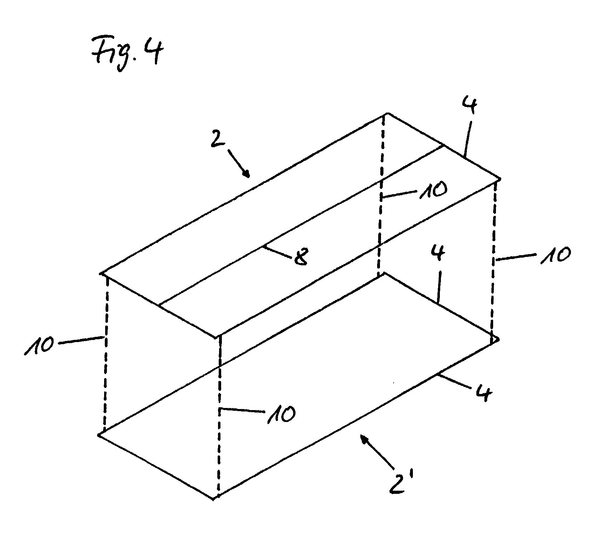

Figur 4 zeigt eine Anordnung aus zwei Metallrahmen 2, 2', wobei einer der Metallrahmen 2' ohne Mittelsteg und einer der Metallrahmen 2 mit Mittelsteg 8 ausgebildet ist. An einer oder mehreren Stellen dieser Metallrahmen 2, 2' sind Ringkerne angeordnet, welche hier nicht dargestellt sind.

Die Metallrahmen 2 und 2' sind durch isolierende Stäbe 10 miteinander verbunden, so daß eine stabile Anordnung vorliegt. Eine solche Anordnung aus zwei Metallrahmen 2, 2' kann beispielsweise zur Untersuchung von Schüttgut verwendet werden, das von einer Fließbandanlage befördert wird.

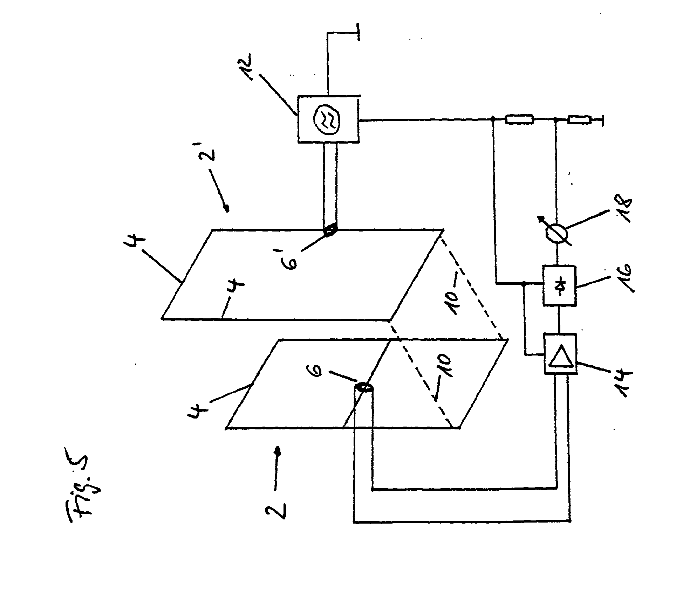

Auch Figur 5 zeigt eine Anordnung aus zwei Metallrahmen 2, 2', wobei in dieser Anordnung isolierende Stäbe 10 nur auf einer Seite der Metallrahmen 2, 2' zur Verbindung vorgesehen sind. Dies kann vorteilhaft sein, um den Zugriff in den Zwischenraum zwischen den Metallrahmen 2, 2' von oben zu ermöglichen. Eine solche Anordnung aus zwei Metallrahmen 2, 2' kann beispielsweise zur Untersuchung von Wäschesäcken in Krankenhäusern verwendet werden. Im Gegensatz zu Figur 4 ist bei Figur 5 der Mittelsteg 8 des Metallrahmens 2 parallel zur kurzen Seite des von dem Metallrahmen 2 gebildeten Rechtecks angeordnet. Diese beiden Anordnungen sind weitgehend gleichwertig, wobei in jedem Fall eine kompensierende Wirkung zu verzeichnen ist. Ferner ist in Figur 5 eine Möglichkeit der elektrischen Verschaltung im Hinblick auf die Metallrahmen 2, 2' dargestellt. Einer der Ringkerne 6' wird von einem Oszillator 12 angesteuert, wodurch er als Sender wirkt. Der Ringkern 6 in dem anderen Metallrahmen 2 wirkt als Empfänger, wobei das empfangene Signal über einen Verstärker 14 und eine Gleichrichtereinrichtung 16 zur Anzeige 18 gebracht wird.

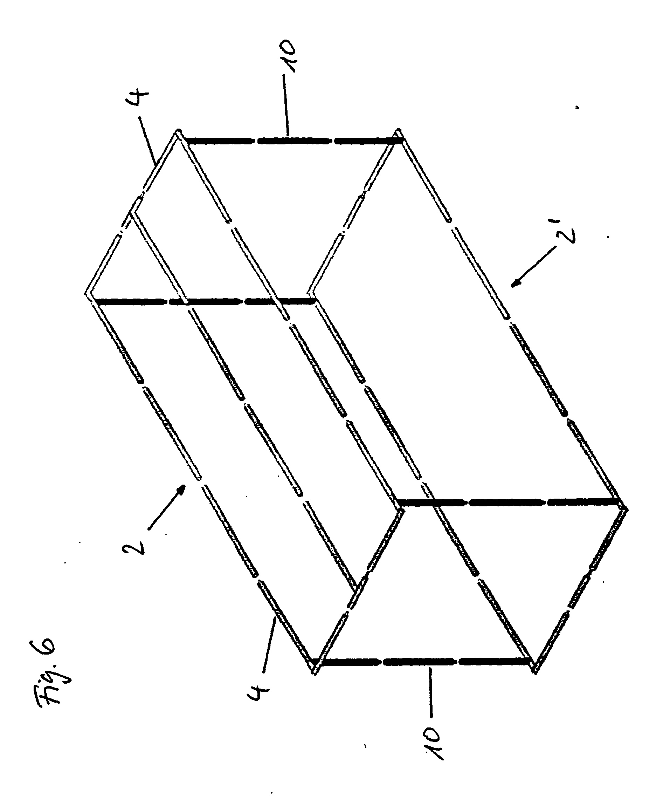

In Figur 6 ist eine weitere Variante einer Anordnung aus zwei Metallrahmen 2, 2' dargestellt, welche durch isolierende Stäbe 10 miteinander verbunden sind. Die Besonderheit bei dieser Variante besteht darin, daß die einzelnen Stäbe 4, 10 in kleinere Einheiten zerlegbar sind, so daß daß System transportabel und besonders variabel ist.

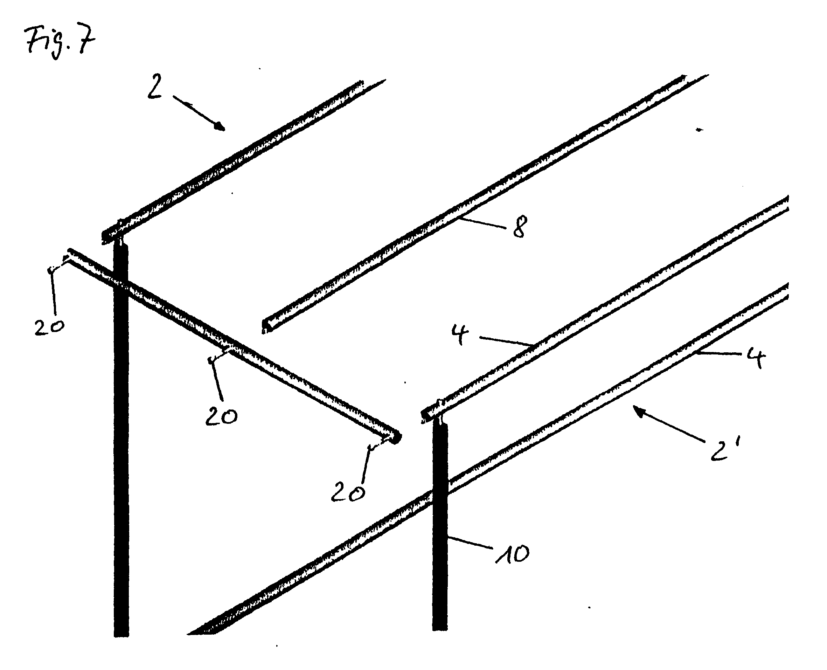

Figur 7 zeigt einen Ausschnitt aus einer Metallrahmenanordnung, wobei dargestellt ist, daß die einzelnen Stäbe 4, 10 über Schrauben 20 miteinander verbunden sind.

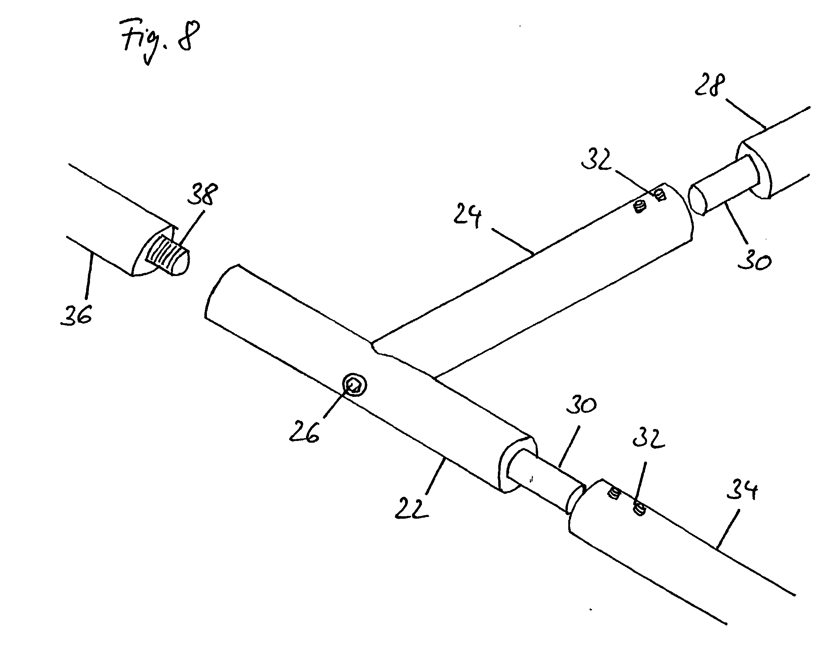

In Figur 8 sind weitere Befestigungsmöglichkeiten dargestellt. An dem Stab 22 setzt mittig ein weiterer Stab 24 an, wobei dieser durch eine versenkte Innen-Sechskantschraube 26 gehalten wird. Auf der anderen Seite des mittig ansetzenden Stabes 24 läßt sich ein weiterer Stab 28 befestigen, indem ein endseitig an dem Stab 8 angesetzter Bolzen 30 in den Stab 24 eindringt und durch Madenschrauben 32 festgeklemmt wird. In gleicher Weise setzt der Stab 22 an einem weiteren Stab 34 an. Auf seiner anderen Seite ist der Stab 22 mit einem Innengewinde versehen, so daß ein weiterer Stab 36, welcher endseitig einen Ansatz 38 mit einem Außengewinde trägt, in den Stab 22 einschraubbar ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Anordnung zum Erzeugen und Empfangen eines Magnetfeldes mit mindestens zwei Rahmen, welche zwei geschlossene Stromkreise bilden, wobei
jeder Rahmen mindestens ein elektrisch leitendes längliches Element (4) aufweist,
in jedem Rahmen das mindestens eine elektrisch leitende Element (4) und/oder mindestens ein weiteres, elektrisch leitendes längliches Element (4, 8) einen Ringkern (6, 6') trägt,
in jedem Rahmen das mindestens eine weitere elektrisch leitende längliche Element (4, 8) mit dem mindestens einem elektrisch leitenden Element (4) in elektrischer Verbindung steht, und
in dem zum Empfang vorgesehenen Rahmen das mindestens eine weitere elektrisch leitende, längliche Element (8) die vom Rahmen definierte Fläche im Wesentlichen halbiert.

2. Anordnung nach Anspruch 1,
**dadurch gekennzeichnet,**
**daß** die mindestens zwei Rahmen aus mehreren elektrisch leitenden länglichen Elementen (4, 8) gebildet sind.

3. Anordnung nach Anspruch 1,
**dadurch gekennzeichnet,**
**daß** die elektrisch leitenden länglichen Elemente (4, 8) Metallstäbe sind, die mindestens einen Metallrahmen (2) bilden, und daß die Anordnung zerlegbar ist.

4. Anordnung nach Anspruch 3,
**dadurch gekennzeichnet,**
**daß** in dem zum Erzeugen vorgesehenen Rahmen das mindestens eine weitere elektrisch leitende längliche Element (8) ein Metallsteg ist, welcher die vom Rahmen definierte Fläche im wesentlichen halbiert.

5. Anordnung nach einem der vorhergehenden Ansprüche,
**dadurch gekennzeichnet,**
**daß** sie mindestens zwei Metallrahmen (2, 2') aufweist und mindestens einer der Metallrahmen (2') ein Sender und einer der Metallrahmen (2) ein Empfänger ist.

6. Anordnung nach Anspruch 5,
**dadurch gekennzeichnet,**
**daß** zwei Metallrahmen (2, 2') vorgesehen sind, welche im wesentlichen parallel angeordnet sind.

7. Anordnung nach einem der Ansprüche 5 oder 6,
**dadurch gekennzeichnet,**
**daß** zwei Metallrahmen (2, 2') vorgesehen sind, welche über isolierende Stäbe (10) miteinander mechanisch verbunden sind.

8. Anordnung nach einem der Ansprüche 5 bis 7,
**dadurch gekennzeichnet,**
**daß** die Metallrahmen (2, 2') rechtwinklig sind.

9. Anordnung nach einem der Ansprüche 3 bis 8,
**dadurch gekennzeichnet,**
**daß** in mindestens einem der Metallrahmen (2, 2') eine Vielzahl von Stegen (8) eingebracht ist, so daß eine Vielzahl von Sendern und/oder Empfängern vorliegt.

10. Verwendung einer Anordnung nach einem der Ansprüche 1 bis 4,
**dadurch gekennzeichnet,**
**daß** die länglichen Elemente eine Bewehrungsmatte bilden.

11. Verwendung einer Anordnung nach einem der Ansprüche
1 bis 4,
**dadurch gekennzeichnet,**
**daß** die länglichen Elemente ein Zellengitter bilden.

12. Verwendung einer Anordnung nach Anspruch 1 oder 2,
**dadurch gekennzeichnet,**
**daß** die länglichen Elemente das Leitungssystem einer Fußbodenheizung bilden.

## Claims

1. Arrangement for generating and receiving a magnetic field with at least two frames, which form two closed circuits, wherein each frame has at least one electrically conductive, elongated element (4),
in each frame the at least one electrically conductive element (4) and/or at least one further, electrically conductive, elongated element (4, 8) carries a toroidal core (6, 6'),
in each frame the at least one further electrically conductive, elongated element (4, 8) is electrically connected to the at least one electrically conductive element (4) and in the frame provided for reception the at least one further electrically conductive, elongated element (8) substantially halves the area defined by the frame.

2. Arrangement according to claim 1,
**characterized in that**
the at least two frames are formed from several electrically conductive, elongated elements (4, 8).

3. Arrangement according to claim 1,
**characterized in that**
the electrically conductive, elongated elements (4, 8) are metal bars forming at least one metal frame (2), and that the arrangement can be disassembled.

4. Arrangement according to claim 3,
**characterized in that**
in the frame provided for generation purposes, the at least one further electrically conductive, elongated element (8) is a metal web, which substantially halves the area defined by the frame.

5. Arrangement according to one of the preceding claims,
**characterized in that**
it has at least two metal frames (2, 2') and at least one of the metal frames (2') is a transmitter and one of the metal frames (2) is a receiver.

6. Arrangement according to claim 5,
**characterized in that**
there are two metal frames (2, 2'), which are substantially in a parallel arrangement.

7. Arrangement according to one of the claims 5 or 6,
**characterized in that**
there are two metal frames (2, 2'), which are mechanically interconnected by means of insulating bars (10).

8. Arrangement according to one of the claims 5 to 7,
**characterized in that**
the metal frames (2, 2') are rectangular.

9. Arrangement according to one of the claims 3 to 8,
**characterized in that**
into at least one of the metal frames (2, 2') is introduced a plurality of webs (8), so that there is a plurality of transmitters and/or receivers.

10. Use of an arrangement according to one of the claims 1 to 4,
**characterized in that**
the elongated elements form a wire mesh reinforcement.

11. Use of an arrangement according to one of the claims 1 to 4,
**characterized in that**
the elongated elements form a cellular lattice.

12. Use of an arrangement according to claims 1 or 2,
**characterized in that**
the elongated elements form the line system of a floor heating.

## Revendications

1. Système pour produire et recevoir un champ magnétique avec au moins deux cadres qui forment deux circuits électriques fermés, dans lequel
chaque cadre comprend au moins un élément oblong (4) conducteur électrique,
dans chaque cadre, l'élément conducteur électrique (4) au nombre d'au moins un et/ou au moins un autre élément oblong (4, 8) conducteur électrique porte un noyau annulaire (6, 6'),
dans chaque cadre, l'autre élément oblong conducteur électrique (4, 8) au nombre d'au moins un est en liaison électrique avec l'élément conducteur électrique (4) au nombre d'au moins un, et
dans le cadre prévu pour la réception, l'autre élément oblong conducteur électrique (8) au nombre d'au moins un divise sensiblement en deux la surface définie par le cadre.

2. Système selon la revendication 1,
**caractérisé en ce que**
les cadres au nombre d'au moins deux sont formés de plusieurs éléments oblongs (4, 8) conducteurs électriques.

3. Système selon la revendication 1,
***caractérisé en* ce que**
les éléments oblongs conducteurs électriques (4, 8) sont des barreaux métalliques qui forment au moins un cadre métallique (2), et
**en ce que** le système est démontable.

4. Système selon la revendication 3,
***caractérisé* en ce que**,
dans le cadre prévu pour la production, l'autre élément oblong conducteur électrique (8) au nombre d'au moins un est une barre métallique qui divise sensiblement en deux la surface définie par le cadre.

5. Système selon l'une quelconque des revendications précédentes,
**caractérisé en ce**
***qu'***il présente au moins deux cadres métalliques (2, 2') et au moins l'un des cadres métalliques (2') est un émetteur et l'un des cadres métalliques (2) est un récepteur.

6. Système selon la revendication 5,
***caractérisé* en ce que**
deux cadres métalliques (2, 2') sont prévus, qui sont disposés de manière sensiblement parallèle.

7. Système selon l'une quelconque des revendications 5 ou 6,
***caractérisé* en ce que**
deux cadres métalliques (2, 2') sont prévus, qui sont reliés mécaniquement l'un à l'autre par des barres isolantes (10).

8. Système selon l'une quelconque des revendications 5 à 7,
***caractérisé* en ce que**
les cadres métalliques (2, 2') sont à angles droits.

9. Système selon l'une quelconque des revendications 3 à 8,
***caractérisé* en ce que**
dans au moins l'un des cadres métalliques (2, 2') est logée une pluralité de barres (8), de sorte qu'on a une pluralité d'émetteurs et/ou de récepteurs.

10. Utilisation d'un système selon l'une quelconque des revendications 1 à 4,
***caractérisée en ce que***
les éléments oblongs forment un voile d'armature.

11. Utilisation d'un système selon l'une quelconque des revendications 1 à 4,
**caractérisée en ce que**
les éléments oblongs forment un réseau de cellules.

12. Utilisation d'un système selon la revendication 1 ou 2,
***caractérisée* en ce que**
les éléments oblongs forment le système de conduites d'un chauffage par le sol.
